# EUROPEAN PATENT SPECIFICATION

(11) **EP 0 358 235 B1**
(45) Date of publication and mention of the grant of the patent: **03.06.1998**
(21) Application number: 89116686.0
(22) Date of filing: 08.09.1989
(51) Int. Cl.: B32B 27/08, B32B 27/28, B32B 27/34, B32B 3/26, B32B 27/20, B32B 31/22

(54) **Process for the manufacture of polyimide resin laminates with an improved slidability**
Verfahren zur Herstellung von Polyimidharz-Schicht- stoffen mit verbesserten Gleiteigenschaften
Procédé de fabrication de laminés en résine polyimide ayant des propriètés de glissement ameliorées.

(30) Priority: 09.09.1988 JP 227145/88
(43) Date of publication of application: 14.03.1990
(73) Proprietor: KANEGAFUCHI KAGAKU KOGYO KABUSHIKI KAISHA, Kita-ku Osaka-shi (JP)
(72) Inventor: Kido, Masaro, Ohtsu-shi Shiga-ken (JP); Yoshioka, Tetsuo, Ohtsu-shi Shiga-ken (JP)
(74) Representative: Grünecker, Kinkeldey, Stockmair & Schwanhäusser Anwaltssozietät

(56) References cited:
- EP-A- 0 185 590
- BE-A- 636 349
- GB-A- 1 144 453
- GB-A- 2 084 544
- US-A- 4 198 458
- US-A- 4 505 982
- Encyclopedia of Polymer Science and Technology , second edition, vol 7, pages 90-91
- Taschenbuch der Kunststoff-Additive , second edition, Carl Hanser Verlag München; pages 348-349

## Description

The present invention relates to a process for producing a polyimide resin film-fluorine containing resin film laminate, which is particularly improved in sliability.

The laminate prepared according to this invention is for example used as tape for taping a conductor of copper, and the conductor so finished is used as motor coil, cable or electric wire for aeroplanes.

Polyimide resin film-fluorine containing resin film laminates are usually used as tapes for taping conductors, such as copper. In the process of taping the conductor, however, the work itself is difficult if the slidability of the tape is poor, resulting in e.g. inclusion of air or fluctuation of tension during taping due to poor slidability. As the tension fluctuates, troubles occur: e.g. the width of the tape decreases with increasing tension, while if the tension is weak, taping is done loosely so that tape is displaced or damaged before it is shifted to the next step. Such a defect seriously influences the quality of the final product, particularly resulting in marked lowering of the breakdown voltage of the cable or coil, which must be avoided.

EP-A-185590 describes a method for the preparation of a laminated film which comprises the steps of:
(a) subjecting at least one of the surfaces of each of a polyimide resin film and a fluorocarbon resin film to a treatment with lower temperature plasma of an inorganic gas; and
(b) press-bonding the thus plasma-treated films with the surfaces treated facing one another at an elevated temperature to integrate the films.

BE-A-636349 describes two methods of imparting improved slidability to a polymeric laminate. In a first method hemispheres are applied to the laminate surface, said hemispheres having a diameter of 1.25 µm to 37.5 µm. In a second method a solid surface having hemispherical depressions of a diameter of 1.25 µm to 37.5 µm is used as a type of roll.

Encyclopedia of Polymer Science and Technology , second edition, vol.7, pages 90-91 ; and "Taschenbuch der Kunststoff-Additive", second edition, Carl Hanser Verlag München, pages 348-349 (in particular pages 349, lines 4-8) disclose fillers and antiblocking agents for resins, wherein - according to the latter - the particles of the antiblocking agent have a size of about 20 µm.

It is the object of the present invention to provide a process for producing a polyimide resin laminate improved in slidability, safe from troubles due to poor slidability during taping and improved in taping workability and also improved in quality.

In an effort to attain the above objects, the present inventors made intensive studies for solving the aforementioned problems about polyimide resin film-fluorine containing resin film laminates when using them for taping, specifically for solving the slidability of the fluorine containing resin film, and arrived at the present invention through discovery of the fact that the above objects can be attained by providing fine undulations on the outer surface of the fluorine containing resin film.

The present invention relates to a process for producing a polyimide resin laminate comprising a polyimide resin film and a fluorine containing resin film comprising the following steps:
(a) mixing a fluorine containing resin, selected from tetrafluoroethylene-hexafluoropropylene copolymers (FEP), tetrafluoroethylene-perfluoroalkyl vinylether copolymers (PFA), tetrafluoroethylene-ethylene copolymers (ETFE) and polychlorotrifluoroethylene, with a filler having a particle size from 1 to 5 µm;
(b) extruding the fluorine containing resin to form a flourine containing resin film;
(c) activating the thus obtained fluorine containing resin film having undulations by corona discharge treatment, flame treatment or dipping treatment in an alkali metal solution; and
(d) laminating the thus obtained activated fluorine containing resin film having undulations to a polyimide film with the side having less undulations on the surface facing the polyimide resin film.

Thus, according to the process of the present invention, a laminate of a polyimide resin film and an activated fluorine containing resin film is produced, wherein fine undulations of 0.03 - 5 µm are formed on the external surface of the aforementioned fluorine containing resin film for improvement in the slidability of the laminate.

The polyimide resin film used in the present invention is obtained from a solution of a polyamide acid as a polyamide precursor.

The polyamide acid is represented by the following formula (I) and is obtainable from an aromatic diamine such as 4,4-diaminophenyl ether and an aromatic tetracarboxylic acid dianhydride such as pyromellitic acid dianhydride. 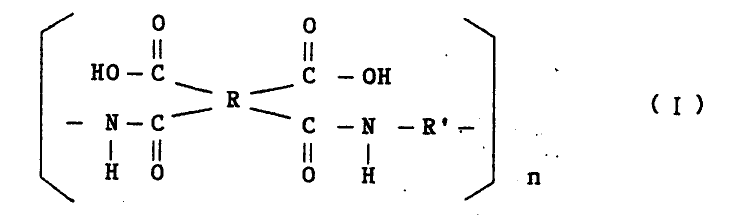 (R : 4-valent aromatic group, R': 2-valent aromatic group)

Typical examples of an organic solvent for the preparation of the polyamide acid resin solution are N,N-dimethylformamide and N,N-dimethylacetamide.

The aforementioned polyamide acid resin solution is first mixed with a dehydrating agent and a catalyst. The typical dehydrating agent is acetic anhydride and the preferred catalyst is tertiary amine, typical being isoquinoline and β-pycoline. The proper mixing ratio is 1 to 8 mols of the dehydrating agent and 0.05 to 1 mol of the catalyst per mol of the polyamide acid. A mixture of the above composition is extruded onto a supporting body, such as a casting drum or belt, controlled to 40 to 120 °C in temperature through a slit die, and after it has become a self-supporting polyamide acid gel film on the supporting body in 5 seconds to 5 minutes, it is stripped off the supporting body and the polyamide acid gel film is pre-dried in a pin-tenter at 100 to 200 °C and after curing at 300 to 500 °C the polyimide resin film is obtained. The thickness of the polyimide resin film used in the present invention is preferably 7 to 125 µm.

The fluorine containing resin film used in the present invention preferably has a fluorine content of not less than 20 weight %, more preferably 50 to 76 weight %. The preferred thickness of the fluorine containing resin film is 7.5 to 125 µm.

The fluorine containing film is manufactured by extruding a fluorine containing resin in a form of film through a die such as a T-die.

According to this invention, undulations of 0.03 - 5 µm are formed on the aforementioned fluorine containing resin film. If the undulations are less than 0.03 µm, no sufficient improvement in slidability can be hoped for, while, if it is in excess of 5 µm, adverse influences such as inclusion of air will result in the later laminating process.

According to the present invention the undulations are formed by mixing the fluorine containing resin with a filler before extruding the fluorine containing resin so as to produce the undulations in the film extruded. As the filler, preferred is an inorganic fine powder or a fluorine containing resin having a higher melting point than the aforementioned fluorine containing resin film. The inorganic fine powder may be selected from SiO₂, TiO₂, CaHPO₄, Ca₂P₂O₇ in powder form. As the fluorine containing resin higher in melting point than the aforementioned fluroine containing resin film a tetrafluoroethylene polymer may be selected, for example, when the aforementioned fluorine containing resin film is of tetrafluoroethylene-hexafluoropropylene. These fillers may be used singly or in combination of two or more.

As mentioned above, to add a filler of more than 5 µm in particle size to a fluorine resin film whose thickness is in a range of 7.5 - 125 µm is effective indeed in forming the undulations on the surface of the film but this at the same time substantially means imparting physical damage to the film, this tending to decrease film's mechanical strength. Adding particles less than 1 µm has little influence on the film's physical properties but it is then difficult to produce the undulations enough for improving the film's slidability. Thus, according to the present invention, the particles have a size of 1 to 5 µm. The proper amount of the aforementioned filler to be added slightly differs depending on the kind thereof. For example, when CaHPO₄ is used, the proper range is 0.05 to 1.0 weight% with respect to the film. When the amount added is too small, the undulations required for improvement of slidability cannot be formed, while, when it is excessive it is difficult to have it uniformly dispersed in the fluorine containing resin, this resulting in impairing uniformity of the fluorine containing resin film. Worse, it largely affects the film's color and causes lowering of transparency.

The fluorine containing resin film having the undulations of 0.03 to 5 µm in its surface by the foregoing method is then passed to the next step of surface activation.

As methods of activating the fluorine containing resin film, there are included corona discharge treatment in atmosphere or in the presence of or absence of an organic solvent gas or an inorganic gas, flame treatment, or dipping treatment in an alkali metal solution. As a rule, activation is applied to both sides of the fluorine containing resin film.

In laminating the polyimide film and the fluorine containing resin film in 2 or 3-ply, it is necessary to laminate the side with less undulations on the surface facing the polyimide resin film. As it is clear from the purport of this invention, it is necessary to carry out lamination with the side more marked in unevenness outward. If the side of more marked unevenness is laminated facing the polyimide resin side, the improvement in slidability normally resulting from the unevenness of the fluorine containing resin film cannot be well expected. Furthermore, lamination itself is affected.

Laminating the polyimide resin film with the activated fluorine containing resin film is accomplished by passing two kinds of films through between a rubber roll and a hot roll preheated at 200 - 260 °C. The press roll's pressure is preferable to be at least 49 kPa (0.5 kg/cm²), and the time of l passing between press rolls is preferable to be 0.001 - 1 sec.

For laminating the fluorine containing films on both sides of the polyimide resin film, there are two alternative methods of first laminating two layers (that is, polyimide resin film and fluorine containing resin film) and then pass it once more with another fluorine containing resin film to thus obtain a three-layer laminate and passing through between press rolls a single layer of the polyimide resin film and two layers of the fluorine containing resin films simultaneously to thus obtain a 3-layer laminate in a single step.

The laminate obtained by either of the aforementioned methods is slit into tapes and is taped round the conductor by a taping device and the taped conductor is used as coils for motors, cables, electric wires for aerocrafts.

According to the present invention, the slidability of the laminate is markedly improved, troubles in the course of taping due to poor slidability are prevented. Further, taping workability is improved and an improved quality of products is ensured.

## Claims

1. A process for producing a polyimide resin laminate comprising a polyimide resin film and a fluorine containing resin film comprising the following steps:
(a) mixing a fluorine containing resin, selected from tetrafluoroethylene-hexafluoropropylene copolymers (FEP), tetrafluoroethylene-perfluoroalkyl vinylether copolymers (PFA), tetrafluoroethylene-ethylene copolymers (ETFE) and polychlorotrifluoroethylene, with a filler having a particle size from 1 to 5 µm;
(b) extruding the fluorine containing resin to form a flourine containing resin film;
(c) activating the thus obtained fluorine containing resin film having undulations by corona discharge treatment, flame treatment or dipping treatment in an alkali metal solution; and
(d) laminating the thus obtained activated fluorine containing resin film having undulations to a polyimide film with the side having less undulations on the surface facing the polyimide resin film.

2. The process of claim 1, wherein said filler is at least one filler selected from inorganic fine particles and fluorine containing resins having a melting point higher than that of the fluorine containing resin film.

3. The process of claim 1 or 2 wherein the filler is selected from inorganic fine particles of SiO₂, TiO₂, CaHPO₄ or Ca₂P₂O₇.

4. The process of claim 1, wherein a laminate comprising two layers, namely one layer of the polyimide film and one layer of the fluorine containing resin film, is produced.

5. The process of claim 1, wherein a laminate comprising three layers, namely one layer of the polyimide film and two layers of the fluorine containing resin film, is produced.

6. The process of claim 1, wherein said fluorine containing resin is a tetrafluoroethylene-hexafluoropropylene copolymer (FEP).

## Patentansprüche

1. Verfahren zur Herstellung eines Polyimidharzlaminates, umfassend einen Polyimidharzfilm und einen Fluor enthaltenden Harzfilm, wobei das Verfahren die folgenden Schritte umfaßt:
(a) das Vermischen eines Fluor enthaltenden Harzes, ausgewählt aus Tetrafluorethylen-Hexafluorpropylen-Copolymeren (FEP), Tetrafluorethylen-Perfluoralkylvinylether-Copolymeren (PFA), Tetrafluorethylen-Ethylen-Copolymeren (ETFE) und Polychlortrifluorethylen, mit einem Füllstoff mit einer Teilchengröße im Bereich von 1 bis 5 µm;
(b) das Extrudieren des Fluor enthaltenden Harzes, um einen Fluor enthaltenden Harzfilm zu bilden;
(c) das Aktivieren des auf diese Weise erhaltenen Fluor enthaltenden Harzfilms mit Unebenheiten mittels einer Koronaentladungsbehandlung, durch Beflammen oder durch Eintauchen in eine Lösung einer Alkalimetallverbindung; und
(d) das Auflaminieren des auf diese Weise erhaltenen aktivierten Fluor enthaltenden Harzfilms mit Unebenheiten auf einen Polyimidfilm, wobei die Seite mit weniger oberflächlichen Unebenheiten auf der Seite des Polyimidharzfilms angeordnet ist.

2. Verfahren nach Anspruch 1, wobei der Füllstoff mindestens ein Füllstoff ist, ausgewählt aus anorganischen feinen Teilchen und Fluor enthaltenden Harzen mit einem Schmelzpunkt, der höher als der Schmelzpunkt des Fluor enthaltenden Harzfilms ist.

3. Verfahren nach Anspruch 1 oder 2, wobei der Füllstoff aus anorganischen feinen Teilchen von SiO₂, TiO₂, CaHPO₄ oder Ca₂P₂O₇ ausgewählt ist.

4. Verfahren nach Anspruch 1, wobei ein Laminat mit zwei Schichten, d.h. mit einer Schicht aus dem Polyimidfilm und einer Schicht aus dem Fluor enthaltenden Harzfilm, hergestellt wird.

5. Verfahren nach Anspruch 1, wobei ein Laminat mit drei Schichten, d.h. mit einer Schicht aus dem Polyimidfilm und zwei Schichten aus dem Fluor enthaltenden Harzfilm, hergestellt wird.

6. Verfahren nach Anspruch 1, wobei das Fluor enthaltende Harz ein Tetrafluorethylen-Hexafluorpropylen-Copolymer (FEP) ist.

## Revendications

1. Procédé pour produire un stratifié de résine polyimide comprenant un film de résine polyimide et un film de résine contenant du fluor comprenant les étapes suivantes consistant:
(a) à mélanger une résine contenant du fluor, choisie parmi les copolymères tétrafluoroéthylène/hexafluoropropylène (FEP), les copolymères tétrafluoroéthylène/éther de perfluoroalkyle et de vinyle (PFA), les copolymères tétrafluoroéthylène/éthylène (ETFE) et le polychlorotrifluoroéthylène, avec une charge ayant une taille de particule de 1 à 5 µm;
(b) à extruder la résine contenant du fluor pour former un film de résine contenant du fluor;
(c) à activer le film de résine contenant du fluor ainsi obtenu ayant des ondulations par traitement par décharge corona, traitement à la flamme ou traitement par immersion dans une solution de métal alcalin; et
(d) à stratifier le film de résine contenant du fluor activé ainsi obtenu ayant des ondulations à un film polyimide avec le côté ayant le moins d'ondulations sur la surface faisant face au film de résine polyimide.

2. Procédé selon la revendication 1, dans lequel ladite charge est au moins une charge choisie parmi les particules fines inorganiques et les résines contenant du fluor ayant un point de fusion supérieur à celui du film de résine contenant du fluor.

3. Procédé selon la revendication 1 ou 2, dans lequel la charge est choisie parmi les particules fines inorganiques de SiO₂, TiO₂, CaHPO₄ ou Ca₂P₂O₇.

4. Procédé selon la revendication 1, dans lequel un stratifié comprenant deux couches, à savoir une couche du film polyimide et une couche du film de résine contenant du fluor, est produit.

5. Procédé selon la revendication 1, dans lequel un stratifié comprenant trois couches, à savoir une couche du film polyimide et deux couches du film de résine contenant du fluor, est produit.

6. Procédé selon la revendication 1, dans lequel ladite résine contenant du fluor est un copolymère tétrafluoroéthylène-hexafluoropropylène (FEP).
